(19) Europäisches Patentamt
European Patent Office
Office européen des brevets

(11) Publication number: 0 274 634 A1

(12) **EUROPEAN PATENT APPLICATION**

(21) Application number: 87117574.1

(22) Date of filing: 27.11.87

(51) Int. Cl.4: A01N 41/10, //(A01N41/10, 35:06)

(30) Priority: 04.12.86 US 937800

(43) Date of publication of application: 20.07.88 Bulletin 88/29

(84) Designated Contracting States: AT BE CH DE ES FR GB GR IT LI LU NL SE

(71) Applicant: STAUFFER CHEMICAL COMPANY
Westport Connecticut 06881(US)

(72) Inventor: Drost, Dirk Cooper
506 Hummingbird Lane
Madison Wisconsin 53714(US)

(74) Representative: Kraus, Walter, Dr. et al
Patentanwälte Kraus, Weisert & Partner
Thomas-Wimmer-Ring 15
D-8000 München 22(DE)

(54) **Synergistic herbicide compositions and method of application.**

(57) A synergistic herbicidal composition comprising a mixture of: (a) a herbicidally effective amount of 2-(2-chloro-4-methanesulfonylbenzoyl)-1,3-cyclohexanedione; and (b) a herbicidally effective amount of 2-(2-nitrobenzoyl)-4,4-dimethyl-1,3-cyclohexanedione; at a weight ratio of (a) to (b) of from about 0.1:1 to about 20:1. Also disclosed is a method of application of the composition.

EP 0 274 634 A1

# SYNERGISTIC HERBICIDE COMPOSITIONS AND METHOD OF APPLICATION

## Background of the Invention

The protection of crops from weeds and other vegetation which inhibit crop growth is a constantly recurring problem in agriculture. To help combat this problem researchers in the field of synthetic chemistry have produced an extensive variety of chemicals and chemical formulations effective in the control of such unwanted growth. Chemical herbicides of many types have been disclosed in the literature and a large number are in commercial use.

In some cases, active herbicides have been shown to be more effective in combination than when applied individually. The result is often termed "synergism," since the combination demonstrates a potency or activity level exceeding that which it would be expected to have, based on a knowledge of the individual potencies of the components. The present invention resides in the discovery that certain cyclohexanediones display this synergism on unwanted vegetation when applied in combination without vegative affect on crops. At higher rates, the crop may in fact be benefitted.

## The Prior Art

Each of the two cyclohexanedione compounds which can be combined to form the synergistic herbicidal compositions of this invention is already known in the art as a herbicide. One compound is 2-(2-chloro-4-methanesulfonylbenzoyl)1,3-cyclohexanedione. The herbicidal activity of this compound is disclosed in European Patent Publication No. 137,963, published April 4, 1985.

The other of the two cyclohexanedione compounds which are combined to form the synergistic compositions of this invention is 2-(2-nitrobenzoyl)-4,4-dimethyl-1,3-cyclohexanedione. This compound is disclosed in European Patent Publication No. 186,118, issued July 2, 1986.

## Description of the Invention

It has now been discovered that synergism in the control of undesirable vegetation is exhibited by compositions comprising a mixture of the following components:

(a) a herbicidally effective amount of 2-(2-chloro-4-methanesulfonylbenzoyl)-1,3-cyclohexandione having the formula

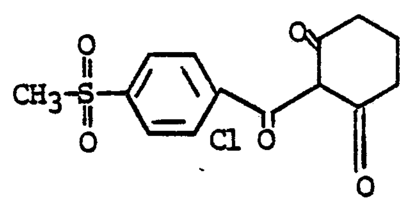

(b) a herbicidally effective amount of 2-(2-nitrobenzoyl)-4,-dimethyl-1,3-cyclohexanedione having the formula

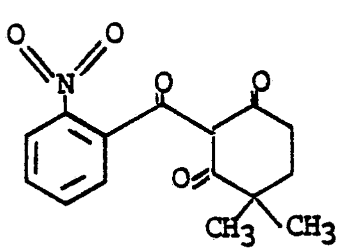

Another embodiment of this invention is a method of controlling undesirable weed pests, and this method comprises applying the synergistic compositions of the invention to the locus where control is desired.

The terms "synergism" and "synergistic" are used herein to convey the result observed when a combination of herbicides demonstrates a potency in excess of that which the combination would be expected to produce on the basis of the potencies of each herbicide applied individually.

The term "herbicide" is used herein to denote a compound which adversely controls or modifies the growth of plants. The term "herbicidally effective amount" is used to indicate the quantity of such a compound or combination of such compounds which is capable of producing an adversely controlling or modifying effect. Controlling or modifying effects include all deviations from natural development, for example: killing, retardation, leaf burn, chlorosis, dwarfing and the like. The term "plants" is used to include all undesirable postemergent vegetation, ranging from seedlings to established vegetation.

These compounds are effectively used in the synergistic compositions of the invention at ratios of Compound (a) to Compound (b) as set forth above, ranging from about 0.01:1 to about 20:1. Preferably, the ratio of Compound (a) to Compound (b) is from about 0.1:1 to about 10:1. Most preferably the ratio of (a) to (b) is 2:1..

Herbicidal Test Data

Synergism for the compositions of this invention was measured in accordance with the following test:

A series of non-irrigated plots of silt loam soil were prepared, each plot being 30 feet long by 6 feet wide. There were three replications for each plot, in what is termed a "randomized complete block" design. Indigenous weeds were evaluated. Along with the weed species were two corn inbreds which were inserted to determine the extent of damage, if any, upon plant species. The corn rows were spaced 38 and 30 inches apart, respectively.

The test compounds were applied both individually, with and without crop oil, and then combined in tank mixes. These compounds and compositions were evaluated for control of wild proso millet, wooly cupgrass and for crop injury. The compounds were applied as liquid solutions with a hand held boom sprayer. The spray was directed between the corn rows so that the pattern intercepted at the base of the corn plant but over the top of the weeds that were present. The sprayer was a small plot sprayer, with a backpack unit, calibrated to apply 25.5 or 27, respectively gallons per acre at 30 psi. Each of the test compounds were applied at rates which were calculated based on the formulation provided and diluted in water, the amount of water being sufficient to apply a final volume of 25.5 or 27 gallons per acre of the spray solutions containing test compounds or compositions.

**The weed species were as follows:**

| Abbreviation | Common Name | Scientific Name |
|---|---|---|
| WPMT | wild proso millet | Panicum milaceum |
| WCUP | woolly cupgrass | Eriochloa villosa (Thunb.) |

**The plant specie was as follows:**

| | | |
|---|---|---|
| CORN | corn | Zea maize (L.) |

The herbicidal agents were applied post-emergence at the several rates indicated.

Approximately 10 days after treatment, crop injury was evaluated.

Approximately 60 days after treatment, each plot of weeds was visually rated for growth control due to all factors of injury.

The degree of weed control or crop injury was estimated and recorded as percentage of control compared to the growth of the same species in an untreated check flat of the same age. The rating scale ranges from 0 to 100%, where 0 equals no effect with plant growth control equal to the untreated control, and 100% equals complete kill.

Herbicide interaction responses were evaluated by use of Limpel's formula (Limpel, L.E., et al., 1962, "Weed Control by Dimethyltetrachloroterephthalate Alone and in Certain Combinations," Proc. NEWCC,

16:48-53):

$$E = X + Y - \frac{XY}{100}$$

where E = expected response
where X = observed (O) value or percent growth control when the herbicide is applied singly; and
Y = observed (O) value or percent growth control when the second herbicide is applied singly.

A response is synergistic when an observed value is greater than the calculated value. A synergistic response is understood to be one in which the interaction response is greater than the sum of responses from the individual chemical treatments. An antagonistic response is the opposite situation.

In the tables which follow:
E = expected activity
O = observed activity

TABLE 1

| Treatment Number | Compounds | Rate lb/A | % WPMT O | % WPMT E | CORN O | CORN E |
|---|---|---|---|---|---|---|
| 1 | X-100 | 0.25 | 23 | | 0 | |
| 2 | X-200 | 0.12 | 12 | | 1 | |
| 3 | X-100 + X-200 | 0.25 + 0.12 | 63 | 26 | 0 | 1 |
| 4 | X-100 + Rigo Oil | 0.25 + 1 qt. | 20 | | 0 | |
| 5 | X-100 + Rigo Oil | 0.12 + 1 qt. | 7 | | 0 | |
| 6 | X-100 + X-200 + Rigo Oil | 0.25 + 0.12 + 1 qt. | 87 | 32 | 0 | 0 |

X-100 = 2-(2-chloro-4-methanesulfonylbenzoyl)-1,3-cyclohexanedione
X-200 = 2-(2-nitrobenzoyl)-4,4-dimethyl-1,3-cyclohexanedione

TABLE 2

| Treatment Number | Compounds | Rate lb/A | % WCUP O | % WCUP E | CORN O | CORN E |
|---|---|---|---|---|---|---|
| 1 | X-100 | 0.25 | 5 | | 0 | |
| 2 | X-200 | 0.25 | 52 | | 1 | |
| 3 | X-100 + X-200 | 0.25 + 0.25 | 75 | 54 | 1 | 1 |
| 4 | X-100 + Rigo Oil | 0.25 + 1 qt. | 3 | | 0 | |
| 5 | X-200 + Rigo Oil | 0.25 + 1 qt. | 62 | | 7 | |
| 6 | X-100 + X-200 + Rigo Oil | 0.25 + 0.25 + 1 qt. | 50 | 63 | 1 | 7 |

X-100 = 2-(2-chloro-4-methanesulfonylbenzoyl)-1,3-cyclohexanedione
X-200 = 2-(2-nitrobenzoyl)-4,4-dimethyl-1,3-cyclohexanedione

In reviewing the above data (Table I), it can be seen that 2-(2-chloro-4-methanesulfonylbenzoyl)-1,3-cyclohexanedione when applied at 1/4 pound per acre gave 23% wild proso millet control, and 2-(2-nitrobenzoyl)-4,4-dimethyl-1,3-cyclohexanedione applied at 1/8 pound per acre gave only 12% control, but when these compounds were tank-mixed and applied at 1/4 pound per acre and 1/8 pound per acre, respectively, 63% control was obtained. Thus, according to Limpel's formula, synergism was present.

Similar values can be observed when the herbicide compounds were combined with Rigo Oil. In that instance, 87% control was obtained, versus a calculated degree of control of 32.4%.

Corn tolerance was antagonistic with the tank mix combination excluding Rigo Oil and additive when Rigo Oil was included.

In reviewing the data from Table 2, it can be seen that 2-(2-chloro-4-methanesulfonylbenzoyl)-1,3-cyclohexanedione when applied at 0.25 lb/A gave 5% woolly cupgrass control and 2-(2-nitrobenzoyl)-4,4-dimethyl-1,3-cyclohexanedione applied at 0.25 lb/A gave 52% control, but when these compounds were tank-mixed and applied at 0.25 lb/A and 0.25 lb/A, respectively, 75% control was obtained. Thus, according to Limpel's Formula, synergism was present.

Other values were obtained when the herbicide compounds were combined with Rigo Oil. In that instance, 50% control was obtained, versus a calculated degree of 63%, indicating antagonism (Table 2).

Corn tolerance was additive by the tank-mix without Rigo Oil but antagonism was present with Rigo Oil.

Application rates for the compositions of this invention will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

The compositions of the present invention show synergistic activity as herbicides in controlling the growth of undesirable vegetation when applied to such vegetation in postemergence application. The compositions are generally embodied in formulations which contain inert or occasionally active ingredients or diluent carriers in addition to the active compounds. Examples of such ingredients or carriers are water, organic solvents, surface active agents, oil, water-in-oil emulsions, wetting agents, dispersing agents, and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long chain fatty alcohols and alkali metal salts of the sulfated fatty alcohols; salts of sulfonic acid; esters of long chain fatty acids; and polyhydric alcohols, in which the alcohol groups are free, omega-substituted polyethylene glycols of relatively long chain length.

The herbicidal compositions can also be applied to the foliage in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

The most preferred formulations are emulsifiable concentrates which consist of an oil solution of the herbicide along with an emulsifying agent. Prior to use the concentrate is diluted with water to form a suspended emulsion of oil droplets. The emulsifiers used are usually a mixture of anionic and nonionic surfactants. Other additives such as spreading agents and stickers can be included in the emulsifiable concentrate.

The formulations described above can be applied to the vegetation sought to be controlled in any conventional manner either before or after the vegetation has emerged from the soil. The vegetation can be in any stage of development after emergence, ranging from seedlings to fully grown plants. Application can be achieved by any conventional technique such as the use of ground spraying equipment or aircraft-mounted sprayers. Various other application techniques will be apparent to one skilled in the pesticide art.

## Claims

1. A synergistic herbicidal composition comprising a mixture of:

(a) a herbicidally effective amount of 2-(2-chloro-4-methanesulfonylbenzoyl)-1,3-cyclohexanedione; and

(b) a herbicidally effective amount of 2-(2-nitrobenzoyl)-4,4-dimethyl-1,3-cyclohexanedione;

at a weight ratio of (a) to (b) of from about 0.1:1 to about 20:1.

2. The composition of Claim 1 wherein the weight ratio of (a) to (b) ranges from about 2 to about 1.

3. A synergistic herbicidal composition comprising a mixture of:

(a) a herbicidally effective amount of 2-(2-chloro-4-methanesulfonylbenzoyl)-1,3-cyclohexanedione;

(b) a herbicidally effective amount of 2-(2-nitrobenzoyl)-4,4-dimethyl-1,3-cyclohexanedione; and

(c) an inert diluent carrier, at a weight ratio of (a) to (b) of from about 0.01:1 to about 20:1.

4. The composition of Claim 3 wherein the weight ratio of (a) to (b) ranges from about 2 to about 1.

5. A method of controlling undesirable vegetation which comprises the application to said vegetation of a synergistic herbicidal composition comprising

(a) a herbicidally effective amount of 2-(2-chloro-4-methanesulfonylbenzoyl)-1,3-cyclohexanedione;

(b) a herbicidally effective amount of 1-(2-nitrobenzoyl)-4,4-dimethyl-1,3-cyclohexanedione;
at a weight ratio of (a) to (b) of from about 0.1:1 to about 20:1.

6. The method of Claim 5 wherein the weight ratio of (a) to (b) ranges from about 2 to about 1.

7. A method of controlling wild proso millet and woolly cupgrass weed species which comprises the application to said weed species of a synergistic herbicidal composition comprising
(a) a herbicidally effective amount of 2-(2-chloro-4-methanesulfonylbenzoyl)-1,3-cyclohexanedione;
(b) a herbicidally effective amount of 1-(2-nitrobenzoyl)-4,4-dimethyl-1,3-cyclohexanedione;
at a weight ratio of (a) to (b) of from about 0.1:1 to about 20:1.

8. The method of Claim 7 wherein the weight ratio of (a) to (b) ranges from about 2 to about 1.

Claims for the following Contracting States : ES; GR

1. A synergistic herbicidal composition comprising a mixture of:
(a) a herbicidally effective amount of 2-(2-chloro-4-methanesulfonylbenzoyl)-1,3-cyclohexanedione; and
(b) a herbicidally effective amount of 2-(2-nitrobenzoyl)-4,4-dimethyl-1,3-cyclohexanedione;
at a weight ratio of (a) to (b) of from about 0.1:1 to about 20:1.

2. The composition of Claim 1, wherein the weight ratio of (a) to (b) ranges from about 2 to about 1.

3. A synergistic herbicidal composition comprising a mixture of:
(a) a herbicidally effective amount of 2-(2-chloro-4-methanesulfonylbenzoyl)-1,3-cyclohexanedione;
(b) a herbicidally effective amount of 2-(2-nitrobenzoyl)-4,4-dimethyl-1,3-cyclohexanedione; and
(c) an inert diluent carrier, at a weight ratio of (a) to (b) of from about 0.01:1 to about 20:1.

4. The composition of Claim 3, wherein the weight ratio of (a) to (b) ranges from about 2 to about 1.

5. A method of controlling undesirable vegetation, which comprises the application to said vegetation of a synergistic herbicidal composition comprising
(a) a herbicidally effective amount of 2-(2-chloro-4-methanesulfonylbenzoyl)-1,3-cyclohexanedione;
(b) a herbicidally effective amount of 1-(2-nitrobenzoyl)-4,4-dimethyl-1,3-cyclohexanedione;
at a weight ratio of (a) to (b) of from about 0.1:1 to about 20:1.

6. The method of Claim 5, wherein the weight ratio of (a) to (b) ranges from about 2 to about 1.

7. A method of controlling wild proso millet and woolly cupgrass weed species, which comprises the application to said weed species of a synergistic herbicidal composition comprising
(a) a herbicidally effective amount of 2-(2-chloro-4-methanesulfonylbenzoyl)-1,3-cyclohexanedione;
(b) a herbicidally effective amount of 1-(2-nitrobenzoyl)-4,4-dimethyl-1,3-cyclohexanedione;
at a weight ratio of (a) to (b) of from about 0.1:1 to about 20:1.

8. The method of Claim 7, wherein the weight ratio of (a) to (b) ranges from about 2 to about 1.

9. A process for preparing a synergistic herbicidal composition, comprising mixing
(a) a herbicidally effective amount of 2-(2-chloro-4-methanesulfonylbenzoyl)-1,3-cyclohexanedione; and
(b) a herbicidally effective amount of 2-(2-nitrobenzoyl)-4,4-dimethyl-1,3-cyclohexanedione;
at a weight ratio of (a) to (b) of from about 0.1:1 to about 20:1.

10. The process of Claim 9, wherein the weight ratio of (a) to (b) ranges from about 2 to about 1.

11. A process for preparing a synergistic herbicidal composition, comprising mixing
(a) a herbicidally effective amount of 2-(2-chloro-4-methanesulfonylbenzoyl)-1,3-cyclohexanedione;
(b) a herbicidally effective amount of 2-(2-nitrobenzoyl)-4,4-dimethyl-1,3-cyclohexanedione; and
(c) an inert diluent carrier, at a weight ratio of (a) to (b) of from about 0.01:1 to about 20:1.

12. The process of Claim 11, wherein the weight ratio of (a) to (b) ranges from about 2 to about 1.

European Patent Office

# EUROPEAN SEARCH REPORT

Application Number

EP 87 11 7574

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 137 963 (STAUFFER)<br>--- | 1-8 | A 01 N 41/10 //<br>(A 01 N 41/10<br>A 01 N 35:06 ) |
| A | EP-A-0 186 118 (STAUFFER)<br>----- | 1-8 | |
| | | | TECHNICAL FIELDS SEARCHED (Int. Cl.4) |
| | | | A 01 N |

The present search report has been drawn up for all claims

| Place of search | Date of completion of the search | Examiner |
|---|---|---|
| THE HAGUE | 17-03-1988 | DECORTE D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)